# EUROPÄISCHE PATENTANMELDUNG

(11) **EP 1 607 529 A2**
(43) Veröffentlichungstag der Anmeldung: **21.12.2005**
(21) Anmeldenummer: 05012401.5
(22) Anmeldetag: 09.06.2005
(51) Int. Cl.: E03C 1/04, B01D 35/04, C02F 1/00

(54) **Anschlussstück für ein Wasserbehandlungsgerät an einen Wasserhahn**

(30) Priorität: 18.06.2004 DE 102004029634
(71) Anmelder: Aqua Carat GmbH, 72622 Nürtingen (DE)
(72) Erfinder: Fiess, Helmut, 71576 Burgstetten (DE)
(74) Vertreter: Kohler Schmid Möbus

(57) **Zusammenfassung**

Ein Anschlussstück (1) zum Anschließen einer Wasserbehandlungseinheit mit einer Wasserbehandlungskammer (8) an einen Wasserhahn (11), mit einem das Anschlussstück (1) umgebenden Gehäuse (2), mit einem Anschluss (3) für den Wasserhahn (11), mit einem Auslass (4) für zu behandelndes Wasser sowie mit einem Einlass (5) und einem Auslass (6) für behandeltes Wasser, ist dadurch gekennzeichnet, dass der Anschluss (3) für den Wasserhahn (11) vollständig innerhalb des Gehäuses (2) des Anschlussstückes (1) angeordnet ist. Damit kann ein marktübliches Wasserbehandlungsgerät Platz sparend und formschön an einen Wasserhahn (11) angeschlossen werden

## Beschreibung

Die Erfindung betrifft ein Anschlussstück zum Anschließen einer Wasserbehandlungseinheit mit einer Wasserbehandlungskammer an einen Wasserhahn, mit einem das Anschlussstück umgebenden Gehäuse, mit einem Anschluss für den Wasserhahn, mit einem Auslass für zu behandelndes Wasser sowie mit einem Einlass und einem Auslass für behandeltes Wasser.

Eine im Auslauf eines Wasserhahns integrierte Filtereinheit wird in EP 0 539 069 A2 und DE 200 16 8.60 U1 beschrieben.

Nachteilig ist hier, dass die Filtereinheit ein begrenztes Volumen besitzt und der Austausch des Filters schwierig ist.

In EP 0 749 346 B1, DE 102 16 847 A1 und WO 03/054310 A1 werden verschiedene an einen Wasserhahn montierbare Wasserbehandlungsgeräte beschrieben. Nachteilig ist hier bei allen Varianten, dass sich die Behandlungseinheiten neben, vor und/oder unterhalb des Wasserhahnes befinden. Dies wird besonders als störend empfunden, wenn der Platz für auslaufendes Wasser durch die Behandlungseinheit begrenzt ist oder wenn der freie Zugang zum auslaufenden Wasser versperrt ist. Weiterhin sind dem Design dieser Anlagen Grenzen gesetzt, was besonders nachteilig ist, weil die Wasserbehandlungsgeräte direkt am Wasserhahn, also im Wohnbereich installiert werden.

Aufgabe der vorliegenden Erfindung ist demgegenüber, oben genannte Nachteile zu vermeiden und ein Anschlussstück der eingangs genannten Art vorzustellen, mit dem ein Wasserbehandlungsgerät Platz sparend und formschön an einen Wasserhahn angeschlossen werden kann.

Diese Aufgabe wird erfindungsgemäß auf überraschend einfache, aber wirkungsvolle Weise dadurch gelöst, dass der Anschluss für den Wasserhahn vollständig innerhalb des Gehäuses des Anschlussstückes angeordnet ist.

Dadurch ist es nicht notwendig, neben dem Auslauf des Wasserhahnes zusätzlichen größeren Platz für das Anschlussstück zur Verfügung zu stellen. Dies würde nicht nur den freien Zugang zum ausfließenden Wasser erschweren. Durch die so entstehende asymmetrische Form wäre das Gesamterscheinungsbild der Armatur nachhaltig verschlechtert.

Bei einer besonders bevorzugten Ausführungsform der Erfindung wird die Fließrichtung des zu behandelnden Wassers innerhalb des Gehäuses des Anschlussstückes umgelenkt, insbesondere um 180°.

Bei einer weiteren vorteilhaften Ausführungsform ist die Wasserbehandlungskammer oberhalb des Gehäuses des Anschlussstückes und damit oberhalb des Wasserhahnes angeordnet. Dies spart Platz und ermöglicht einen freien Zugang zum ausfließenden Wasser. Außerdem ist durch diese Anordnung der Behandlungskammer auf dem Wasserhahn eine symmetrische und formschöne Ausgestaltung möglich.

Bei einer Weiterbildung dieser Ausführungsform sind das Gehäuse des Anschlussstückes und das Gehäuse der Wasserbehandlungskammer formschlüssig miteinander verbunden. Dadurch ist eine besonders kompakte Bauweise realisierbar.

Bei einer Ausführungsform der Erfindung befindet sich der Auslass für behandeltes Wasser direkt unterhalb des Anschlusses für den Wasserhahn. Dadurch bleibt die ursprüngliche Austrittsstelle des Wassers quasi erhalten und ist nur wenige Millimeter nach unten versetzt.

Bei einer weiteren vorteilhaften Ausgestaltung der Erfindung enthält die Wasserbehandlungskammer eine Filtereinheit, beispielsweise aus Aktivkohle, Keramik, Sand und/oder Cellulose. Damit ist eine zusätzliche Reinigung des Wassers, aber auch die Eliminierung unerwünschter Geruchsstoffe wie beispielsweise Chlor möglich.

Bei einer weiteren Variante enthält die Wasserbehandlungskammer ein Ionenaustauschermaterial. Dadurch können unerwünschte Ionen gezielt entfernt werden. Durch Austausch von Calcium- und Magnesium-Ionen gegen Natrium- oder Wasserstoff-Ionen kann hartes Wasser enthärtet oder entkarbonisiert werden.

Prinzipiell ist es auch möglich, dass die Wasserbehandlungskammer eine Desinfektionseinrichtung enthält. Dies kann zum Beispiel eine UV-Lampe oder aber eine chemische Desinfektion sein.

Bei einer weiteren vorteilhaften Ausführungsform enthält die Wasserbehandlungskammer eine Schüttung aus Edelsteinen und/oder Halbedelsteinen oder Kombinationen verschiedener Edelsteine und/oder Halbedelsteine. Aus der Steinheilkunde ist bekannt, dass Edelsteine die Eigenschaften des Wassers positiv beeinflussen können.

Es ist auch ohne Probleme möglich, mehrere der genannten Wasserbehandlungsmöglichkeiten in der Behandlungskammer in Kombination zu integrieren.

Schließlich zeigt es sich als vorteilhaft, das Gehäuse des Anschlussstückes und das Gehäuse der Wasserbehandlungskammer über einen Bajonettanschluss miteinander zu verbinden. So ist ein einfacher und schneller Wechsel der erschöpften Behandlungseinheit möglich.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert.

Es zeigen:

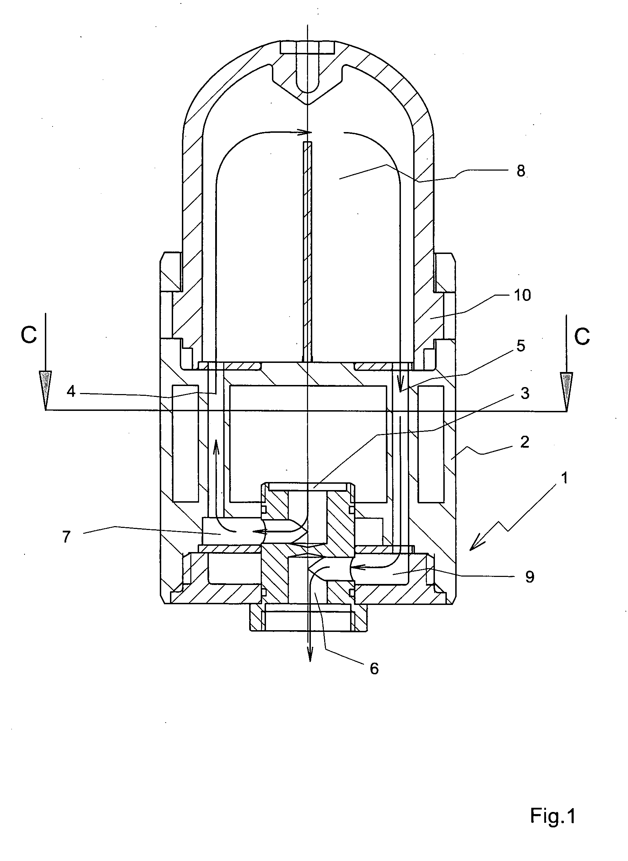

- Fig. 1: einen schematischen Vertikalschnitt durch eine Ausführungsform des erfindungsgemäßen Anschlussstückes;

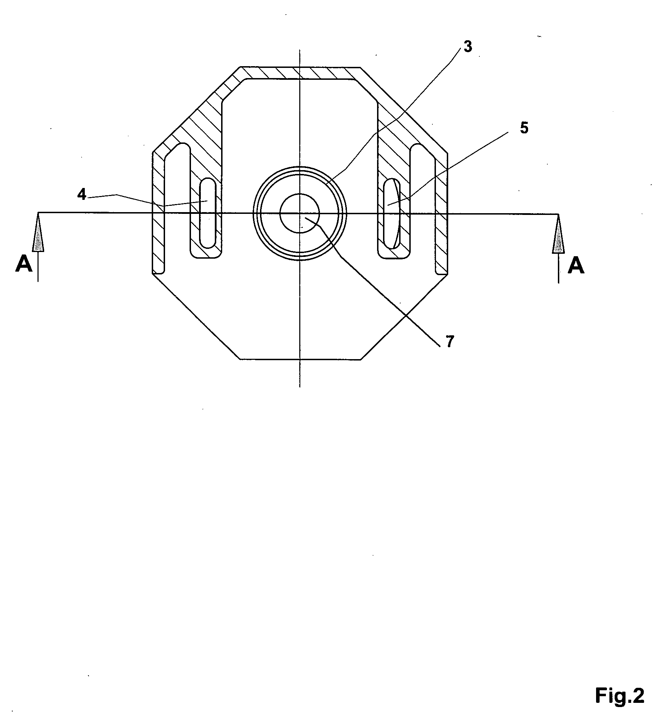

- Fig. 2: einen Schnitt durch die Ausführungsform von Fig.1 entlang der Schnittlinie C-C; und
- Fig.3: einen schematischen Vertikalschnitt senkrecht zur Linie A-A in Fig.2.

Das Anschlussstück **1** umfasst ein Gehäuse **2,** einen Anschluss **3** für einen Wasserhahn **11,** der sich im Gehäuse **2** befindet, einen Auslass **4** für zu behandelndes Wasser, einen Einlass **5** für behandeltes Wasser sowie einen Auslass **6** für behandeltes Wasser.

Das Wasser strömt über die mit dem Anschluss **3** dicht verbundene Wasserarmatur in das Anschlussstück **1.** Anschluss **3** wird mit dem Wasserhahn **11** so verbunden wie normalerweise ein Perlator. Dieser muss vor Montage des Anschlussstücks **1** an den Wasserhahn **11** entfernt werden. Dabei befindet sich der Anschluss **3** nun vollständig im Innern des Gehäuses **2.** Das Wasser erfährt im Zulaufkanal **7** eine Umlenkung um 180° und fließt anschließend in die von einem Gehäuse **10** umgebene Wasserbehandlungskammer **8.**

Die Wasserbehandlungskammer **8** der Behandlungseinheit kann beispielsweise mit Aktivkohle, Ionenaustauschermaterial oder Edelsteinen gefüllt sein.

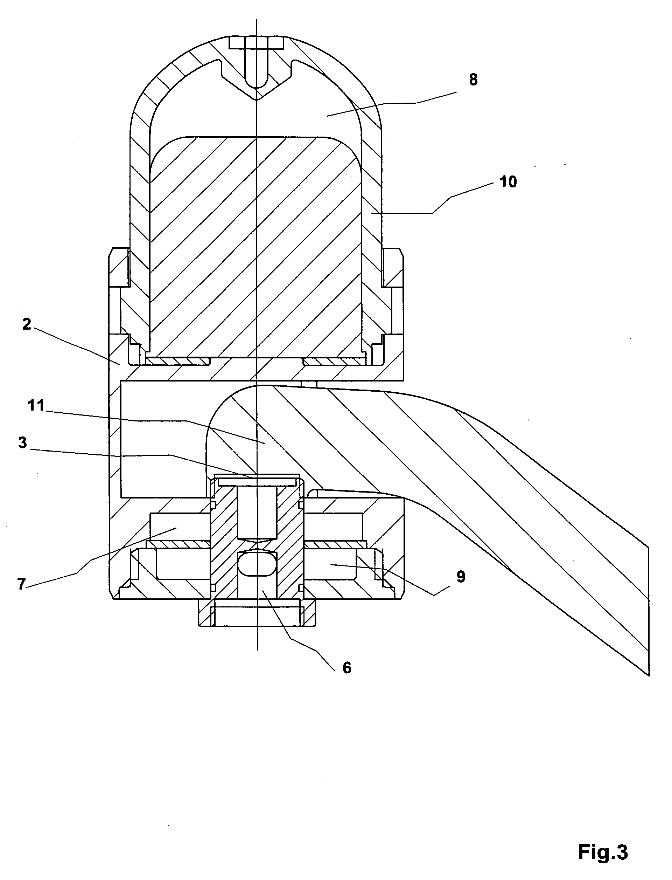

Die Wasserbehandlungskammer **8** befindet sich direkt oberhalb des Anschlusses **3** und damit oberhalb des in Fig.3 näher dargestellten Wasserhahnes **11.** Das behandelte Wasser fließt über den Kanal **9** zur Austrittsstelle **6,** die sich direkt unterhalb des Anschlusses **3** für den Wasserhahn **11** befindet.

### Bezugszeichenliste

- 1: Anschlussstück
- 2: Gehäuse des Anschlussstücks
- 3: Anschluss für den Wasserhahn
- 4: Auslass für zu behandelndes Wasser
- 5: Einlass für behandeltes Wasser
- 6: Auslass für behandeltes Wasser
- 7: Zulaufkanal
- 8: Wasserbehandlungskammer
- 9: Kanal zum Auslass
- 10: Gehäuse der Wasserbehandlungskammer
- 11: Wasserhahn

## Patentansprüche

1. Anschlussstück **(1)** zum Anschließen einer Wasserbehandlungseinheit mit einer Wasserbehandlungskammer **(8)** an einen Wasserhahn **(11),** mit einem das Anschlussstück **(1)** umgebenden Gehäuse **(2),** mit einem Anschluss **(3)** für den Wasserhahn **(11),** mit einem Auslass **(4)** für zu behandelndes Wasser sowie mit einem Einlass **(5)** und einem Auslass **(6)** für behandeltes Wasser,
**dadurch gekennzeichnet,**
**dass** der Anschluss **(3)** für den Wasserhahn **(11)** vollständig innerhalb des Gehäuses **(2)** des Anschlussstückes **(1)** angeordnet ist.

2. Anschlussstück nach Anspruch 1, **dadurch gekennzeichnet, dass** die Fließrichtung des zu behandelnden Wassers innerhalb des Gehäuses **(2)** des Anschlussstückes **(1)** im Zulaufkanal **(7)** eine Umlenkung, insbesondere um 180°, erfährt.

3. Anschlussstück nach Anspruch 1 oder 2, **dadurch gekennzeichnet, dass** die Wasserbehandlungskammer **(8)** oberhalb des Gehäuses **(2)** des Anschlussstückes **(1)** und damit oberhalb des Wasserhahnes **(11)** angeordnet ist.

4. Anschlussstück nach Anspruch 3, **dadurch gekennzeichnet, dass** das Gehäuse **(2)** des Anschlussstückes **(1)** und ein die Wasserbehandlungskammer **(8)** umgebendes Gehäuse **(10)** formschlüssig miteinander verbunden sind.

5. Anschlussstück nach einem der vorhergehenden Ansprüche, **dadurch gekennzeichnet, dass** der Auslass **(6)** für behandeltes Wasser unterhalb des Anschlusses **(3)** für den Wasserhahn **(11)** angeordnet ist.

6. Anschlussstück nach einem der vorhergehenden Ansprüche, **dadurch gekennzeichnet, dass** die Wasserbehandlungskammer **(8)** eine Filtereinheit enthält.

7. Anschlussstück nach Anspruch 6, **dadurch gekennzeichnet, dass** die Filtereinheit ein Adsorptionsmittel, insbesondere Aktivkohle, enthält.

8. Anschlussstück nach Anspruch 6 oder 7, **dadurch gekennzeichnet, dass** die Filtereinheit ein Keramik-, Sand- und/oder Cellulosefilter umfasst.

9. Anschlussstück nach einem der vorhergehenden Ansprüche, **dadurch gekennzeichnet, dass** die Wasserbehandlungskammer **(8)** Ionenaustauschermaterial enthält.

10. Anschlussstück nach einem der vorhergehenden Ansprüche, **dadurch gekennzeichnet, dass** die Wasserbehandlungskammer **(8)** eine Desinfektionseinrichtung enthält.

11. Anschlussstück nach einem der vorhergehenden Ansprüche, **dadurch gekennzeichnet, dass** die Wasserbehandlungskammer **(8)** Edelsteine und/oder Halbedelsteine oder Kombinationen verschiedener Edelsteine und/oder Halbedelsteine enthält.

12. Anschlussstück nach einem der vorhergehenden Ansprüche, **dadurch gekennzeichnet, dass** das Gehäuse **(2)** des Anschlussstückes **(1)** und das Gehäuse **(10)** der Wasserbehandlungskammer **(8)** über einen Bajonettanschluss miteinander verbunden sind.
